# DEMANDE DE BREVET EUROPEEN

(11) **EP 3 156 777 A1**
(43) Date de publication de la demande: **19.04.2017**
(21) Numéro de dépôt: 16193526.7
(22) Date de dépôt: 12.10.2016
(51) Int. Cl.: G01M 1/02, B60C 25/132, B66F 9/14

(54) **DISPOSITIF DE MONTAGE/DEMONTAGE DE PNEUMATIQUE D'UNE ROUE DE VEHICULE ET D'EQUILIBRAGE DE ROUE**

(30) Priorité: 13.10.2015 FR 1559723
(71) Demandeur: Guernet Compresseurs, 89300 Joigny (FR)
(72) Inventeur: GUERNET, Hervé, 89100 GRON (FR)
(74) Mandataire: Oudin, Stéphane

(57) **Abrégé**

La présente invention concerne un dispositif (1) de montage/démontage de pneumatique et d'équilibrage de roue de véhicule, ledit dispositif (1) comportant au moins un premier châssis (2), un bras (3) articulé à l'une des extrémités dudit châssis (2), un mandrin (4) solidaire de l'extrémité libre dudit bras (3) et agencé pour solidariser et faire tourner une jante autour d'un axe de rotation sensiblement perpendiculaire au plan longitudinal dudit bras (3), et un porte-outil de montage/démontage de pneumatique, ledit dispositif (1) étant remarquable en ce qu'il comporte des moyens d'équilibrage solidaires de l'extrémité libre du bras (3) et comportant au moins une équilibreuse munie d'au moins un carter contenant un moteur entrainant en rotation un arbre apte à recevoir une roue à équilibrer, ledit arbre s'étendant de la face avant du carter suivant une direction sensiblement perpendiculaire au plan longitudinal dudit bras (3) et opposée au mandrin (4).

## Description

### Domaine technique

La présente invention concerne un dispositif de montage/démontage et d'équilibrage de pneumatiques de véhicules du type poids lourds principalement.

### Technique antérieure

On connaît déjà de nombreux dispositifs permettant le montage/démontage de pneumatiques, mais également leur gonflage. La grande majorité de ces dispositifs est installée à demeure dans des garages ou des magasins spécialisés dans l'entretien des véhicules.

Cependant, on connait également des dispositifs de montage/démontage de pneumatiques pouvant être embarqués dans un véhicule utilitaire léger d'intervention. De tels dispositifs comportent classiquement au moins un premier châssis, un bras articulé à l'une des extrémités dudit châssis, un mandrin solidaire de l'extrémité libre dudit bras et agencé pour solidariser et faire tourner une jante autour d'un premier axe de rotation sensiblement horizontal, et un porte-outil muni d'au moins un outil de montage/démontage de pneumatiques, ledit porte-outil étant télescopique et apte à se déplacer par rapport audit bras pour positionner ledit outil en position de travail. Lesdits bras et porte-outil sont mobiles afin de positionner le mandrin et l'outil dans leur position de travail respective. Ces dispositifs sont particulièrement intéressants car ils sont très compacts grâce notamment au fait que l'ensemble bras - porte-outil peut se replier sur le châssis.

Toutefois, une fois le pneumatique usagé démonté de la roue et remplacé par un nouveau similaire, il est nécessaire d'équilibrer la roue, dans les meilleurs délais afin de bénéficier des avantages en termes de sécurité, de confort et de durabilité que présente une roue bien équilibrée.

Pour cela, on connaît deux types d'équilibreuses : statique ou dynamique, pour déterminer le déséquilibre d'une roue sur laquelle un pneumatique est monté.

Dans le premier cas, il faut ajouter une masse à la roue, qui n'est pas en mouvement, de manière à déplacer son centre de gravité pour qu'il se retrouve sur l'axe géométrique de la roue, c'est-à-dire au centre du moyeu. Toutefois ce type d'équilibrage ne permet pas de compenser les déséquilibres dynamiques provoqués par les effets de torsion qui agissent sur la roue.

L'équilibrage dynamique, qui est plus précis que le précédent, consiste à ajouter des masselottes sur la roue, qui est en mouvement, de sorte à rendre la répartition des masses symétrique selon le plan de la roue afin de ramener l'axe d'inertie sur l'axe géométrique de cette dernière.

Pour l'équilibrage dynamique, la roue à équilibrer est montée sur un arbre qui est entraîné en rotation à une vitesse prédéfinie. Lorsque ladite vitesse est atteinte, les forces générées par l'arbre en raison du déséquilibre de la roue sont mesurées. A partir de ces mesures, qui sont synchronisées avec le signal d'angle de rotation de la roue, les indications sont obtenues en relation avec le degré de déséquilibre de la roue, et donc les positions et le poids des contrepoids à appliquer pour corriger le déséquilibre sont obtenus.

Une équilibreuse dynamique est généralement une machines de dimensions importantes, difficilement transportable et classiquement installée dans un garage.

Par conséquent, une fois la roue équipée du nouveau pneu, il faut la démonter du dispositif de montage/démontage de pneumatiques embarqué dans un véhicule utilitaire léger d'intervention, afin d'emmener la roue sur un autre site pour la monter sur une équilibreuse de manière à effectuer son équilibrage. Cela a pour inconvénient de générer une perte de temps et d'argent.

Pour corriger cet inconvénient, on connaît des moyens d'équilibrage qui se montent sur le mandrin du dispositif de montage/démontage de pneumatique. Ce type de moyens est certes pratique, mais nécessite un montage et interdit toute autre utilisation du mandrin durant l'opération d'équilibrage.

### Exposé de l'invention

Le but de la présente invention est de proposer un dispositif de montage/démontage de pneumatique et d'équilibrage de roue de véhicule permettant de pallier les inconvénients décrits ci-dessus. Le dispositif, selon l'invention, est compact, peut être embarqué dans un véhicule utilitaire léger d'intervention pour remplacer le pneumatique usagé ou endommagé d'une roue d'un véhicule et équilibrer cette dernière, une fois le pneumatique changé, directement à proximité du véhicule. Enfin, dans un souci de rapidité et d'efficacité, ledit dispositif permet de monter/démonter le pneumatique d'une roue tout en équilibrant une autre roue, sans avoir à démonter ou remonter le moindre outillage.

Conformément à l'invention, il est donc proposé un dispositif de montage/démontage de pneumatique et d'équilibrage de roue de véhicules, notamment du type poids lourds, embarqué dans un véhicule utilitaire léger, ledit dispositif comportant au moins un châssis, un bras articulé à l'une des extrémités dudit châssis et apte se replier en deux sur lui-même, un mandrin solidaire de l'extrémité libre dudit bras et agencé pour solidariser et faire tourner une jante autour d'un axe de rotation sensiblement perpendiculaire au plan longitudinal dudit bras, un porte-outil muni d'au moins un outil de montage/démontage de pneumatique, et des moyens d'équilibrage solidaires de l'extrémité libre du bras et comportant au moins une équilibreuse munie d'au moins un carter contenant un moteur entraînant en rotation un arbre apte à recevoir une roue à équilibrer, ledit arbre s'étendant de la face avant du carter suivant une direction sensiblement perpendiculaire au plan longitudinal dudit bras et opposée au mandrin, ledit dispositif étant remarquable en ce que les moyens d'équilibrage comportent avantageusement une glissière fixée à l'une de ses extrémités sur l'extrémité libre du bras et apte à recevoir ladite équilibreuse de manière à pouvoir déplacer cette dernière par rapport au bras selon une direction perpendiculaire au plan longitudinal dudit bras et opposée au mandrin.

De manière préférée, la glissière comporte un premier profilé fixé à l'une de ses extrémités sur l'extrémité libre du bras et un deuxième profilé apte à recevoir l'équilibreuse et à coulisser à l'intérieur dudit premier profilé entre une position "repos" et une position "travail".

Selon un mode de réalisation préféré, lesdits premier et deuxième profilés ont une section transversale en forme générale de U et comportent chacun respectivement une âme et deux ailes parallèles entre elles et issues perpendiculairement des bords longitudinaux de ladite âme, le deuxième profilé étant tel que sa largeur hors-tout est strictement inférieure à la distance entre les faces internes des ailes du premier profilé.

Le premier profilé comprend avantageusement sur chacune de ses ailes :
- une première lumière traversant l'aile associée de part en part et s'étendant parallèlement à ladite âme depuis l'arrière du premier profilé jusqu'au voisinage du milieu de ce dernier,
- une deuxième lumière traversant l'aile associée de part en part et comportant une première partie s'étendant de façon inclinée, en s'écartant de ladite âme, depuis le voisinage du milieu du premier profilé jusqu'à l'avant de ce dernier et une deuxième partie issue de l'extrémité de ladite première partie située du côté avant du premier profilé et s'étendant en direction et perpendiculairement à l'âme, lesdites premières et deuxièmes lumières sont respectivement disposées symétriquement par rapport à l'axe longitudinal du premier profilé.

De même, le deuxième profilé comporte de préférence, d'une part, une paroi interne reliant les deux ailes au voisinage de leur milieu et étant munie d'une poignée sur sa face arrière et de deux pions de centrage sur sa face avant, ladite paroi interne déterminant avec les parties avant de l'âme et des ailes un logement et, d'autre part, une découpe réalisée sur l'avant de chacune de ses ailes.

Selon un mode de réalisation préféré, la découpe a une forme de L et comporte une première partie issue perpendiculairement du bord avant de l'aile associée et une deuxième partie issue de l'extrémité de ladite première partie et s'étendant en direction et perpendiculairement à l'âme.

En outre, le deuxième profilé comporte avantageusement des moyens de guidage aptes à coopérer avec les premières et deuxièmes lumières du premier profilé pour le guider lorsqu'il passe de sa position "repos" à sa position "travail".

Lesdits moyens de guidage comportent de préférence, d'une part, un axe traversant l'arrière du deuxième profilé perpendiculairement aux ailes et débouchant à l'extérieur de chacune de ces dernières, chaque extrémité libre dudit axe étant apte à coopérer avec l'une des premières lumières du premier profilé et, d'autre part, deux organes de serrage comprenant une poignée munie d'une tige filetée, cette dernière étant apte à coopérer avec la deuxième lumière du premier profilé et un taraudage réalisé dans l'aile associée du deuxième profilé de sorte à permettre non seulement le guidage de ce dernier mais également son blocage à l'intérieur du premier profilé.

Le carter comporte des logements sur sa face arrière et un pion de guidage issu perpendiculairement de chacune de ses faces longitudinales, lesdits logements et pions de guidage étant aptes à coopérer respectivement avec les pions de centrage et la découpe de l'aile associée du deuxième profilé, lorsque l'équilibreuse est insérée dans le logement du deuxième profilé entre les ailes et en appui sur l'âme et sur la face avant de la paroi interne.

Le dispositif comporte avantageusement des moyens de freinage de la roue à équilibrer.

Selon un mode de réalisation préféré, lesdits moyens de freinage comportent une tige articulée aux moyens d'équilibrage autour d'un axe sensiblement perpendiculaire à l'arbre de l'équilibreuse, ladite tige comportant à l'une de ses extrémités d'un patin apte à être appliqué, grâce à la rotation de la tige, sur le flan du pneumatique de la roue à équilibrer pour ralentir puis arrêter ladite roue.

### Description sommaire des figures

D'autres avantages et caractéristiques ressortiront mieux de la description qui va suivre d'un mode d'exécution d'un dispositif de montage/démontage de pneumatiques selon l'invention en référence aux figures annexées sur lesquelles :
- la figure 1 est une vue en perspective d'un dispositif de montage/démontage et de gonflage de pneumatiques selon l'invention sans les moyens d'équilibrage et avec son bras articulé replié ;
- la figure 2 est une vue de côté du dispositif de la figure 1 ;
- la figure 3 est une vue de dessus du dispositif de la figure 1 avec son bras déplié ;
- la figure 4 est une vue en perspective du bras du dispositif de la figure 1 avec la glissière des moyens d'équilibrage en position "repos" ;
- la figure 5 est une vue en perspective du bras du dispositif de la figure 1 avec la glissière des moyens d'équilibrage en position "travail" ;
- la figure 6 est une vue en perspective de la glissière des moyens d'équilibrage en position "travail" avec l'équilibreuse représentée en pointillés ;
- la figure 7 est une vue en perspective de la glissière des moyens d'équilibrage en position "repos" ;
- la figure 8 est une vue de côté de la glissière des moyens d'équilibrage en position "travail" ;
- la figure 9 est une vue de côté de la glissière des moyens d'équilibrage en position "repos".

### Meilleure manière de réaliser l'invention technique

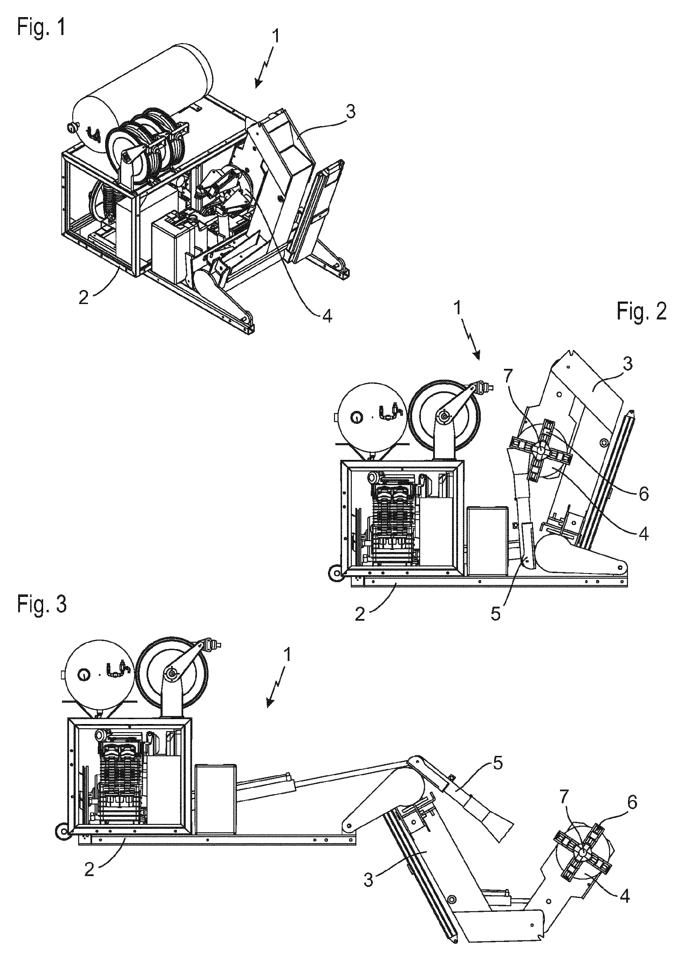

En référence aux figures 1 à 9, l'invention concerne un dispositif 1 de montage/démontage de pneumatique d'une roue et d'équilibrage de ladite roue, cette dernière appartenant notamment à un véhicule du type poids lourds.

On décrira ci-après un dispositif apte à être embarqué sur un véhicule utilitaire léger, c'est-à-dire sur un véhicule dont le poids total autorisé en charge n'excède pas 3,5 tonnes et pouvant être conduit par tout détenteur d'un permis de catégorie B (pour la France) ou analogue. Il va de soi que ledit dispositif pourra être utilisé pour monter/démonter tout type de pneumatiques et être installé sur d'autres types de véhicules, notamment les camions poids lourds, sans sortir du cadre de la présente invention.

Toutefois, on comprend bien que ledit dispositif pourra être installé à demeure dans un garage ou un atelier sans sortir du cadre de la présente invention.

Ainsi, en référence aux figures 1 à 3, le dispositif 1 comporte un châssis 2 tubulaire, un bras 3 articulé à l'une de ses extrémités au châssis 2, un mandrin 4 solidaire de l'extrémité libre dudit bras 3 et agencé pour solidariser et faire tourner autour d'un axe de rotation sensiblement perpendiculaire au plan longitudinale du bras 3 la jante de la roue, non représentée sur les figures, d'un véhicule du type poids lourd, et un porte-outil 5 solidaire dudit bras 3.

On comprend bien que l'extrémité libre dudit bras 3 articulé à l'une de ses extrémités au châssis 2 correspond à l'extrémité opposé audit châssis 2 qui n'est pas solidaire de ce dernier et donc libre.

Le bras 3 est tel qu'il peut être mis en mouvement pour se déplier afin de positionner le mandrin 4 à l'extérieur du véhicule utilitaire léger, non représenté sur les figures, dans sa position de travail et se replier en deux sur lui-même à l'intérieur dudit véhicule utilitaire léger de sorte à limiter l'encombrement hors-tout du dispositif une fois replié.

Le mandrin 4, qui est solidaire de l'extrémité libre du bras 3, comprend un système de blocage de jante comportant une pluralité de griffes 6 disposées à égale distance autour d'un moyeu 7 apte à pivoter par rapport au bras 3 et agencé pour permettre l'auto-centrage de la jante lors de sa mise en place sur ledit moyeu 7.

Le porte-outil 5 reçoit à son extrémité libre un outil (non représenté) agencé pour s'insérer entre un pneumatique et une jante afin de monter/démonter ledit pneumatique. Pour positionner l'outil dans sa position de travail correspondant à la position où ledit outil est prêt à être inséré entre la jante et le pneumatique, le porte-outil 5 est télescopique et apte à se déplacer par rapport audit bras 3.

Pour de plus amples informations concernant le dispositif 1, on se référera avantageusement à la demande de brevet FR 3 005 439 déposée le 07/05/2013 au nom de la société GUERNET COMPRESSEURS. Ainsi, on comprendra alors, notamment, que, pour pouvoir se replier en deux sur lui-même, le bras 3 comporte deux portions articulées entre elles autour d'un axe sensiblement horizontal et perpendiculaire à l'axe longitudinal dudit bras 3.

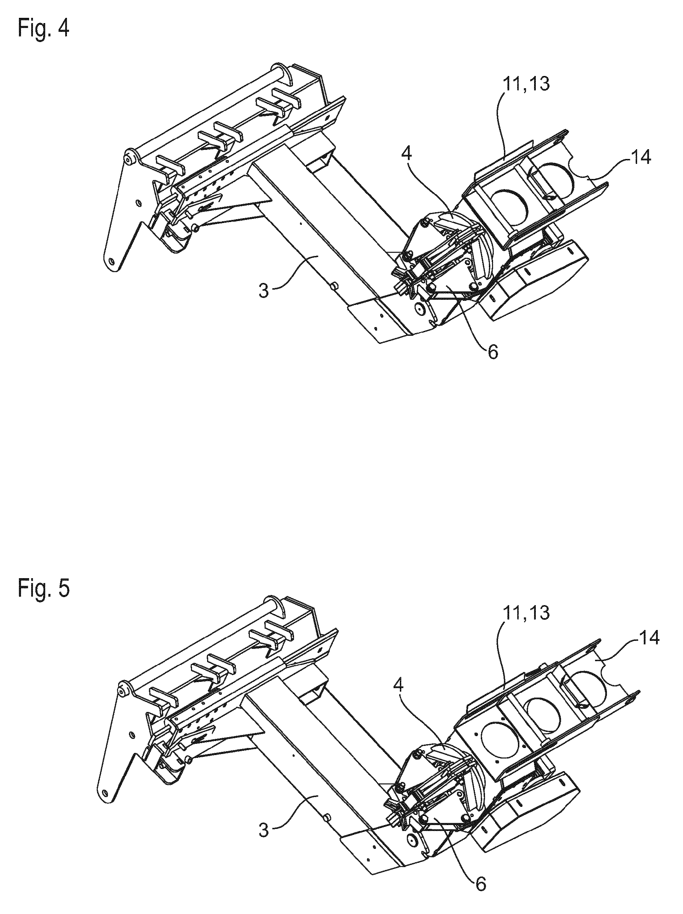

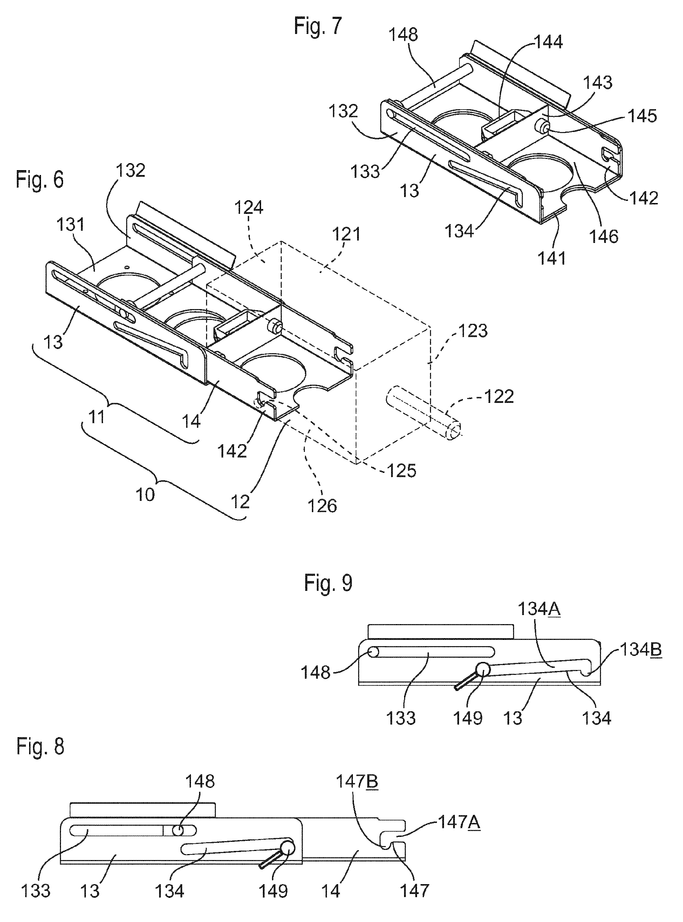

En référence aux figures 4 à 9, le dispositif 1 de montage/démontage de pneumatique selon l'invention comporte en outre des moyens d'équilibrage 10. Ces derniers comprennent une glissière 11 fixée à l'une de ses extrémités sur l'extrémité libre du bras 3 et une équilibreuse 12 (Cf. figure 6) fixée sur ladite glissière 11 de manière à pouvoir être déplacée par rapport au bras 3 selon une direction perpendiculaire au plan longitudinal dudit bras 3 opposée au mandrin 4.

En référence aux figures 6 à 9, ladite glissière 11 comporte un premier profilé 13 fixé à l'une de ses extrémités sur l'extrémité libre du bras 3 et un deuxième profilé 14 apte à recevoir l'équilibreuse 12 et à coulisser à l'intérieur dudit premier profilé 13 entre une position "repos" dans laquelle le deuxième profilé 14 est contenu dans le premier profilé 13 et une position "travail" dans laquelle le deuxième profilé 14 est au moins en partie sorti du premier profilé 13.

Toutefois, dans la position "repos", le deuxième profilé 14 pourra ne pas être entièrement contenu dans le premier profilé 13, sans sortir du cadre de la présente invention.

Lesdits premier et deuxième profilés 13,14 ont avantageusement une section transversale en forme générale de U et comportent chacun respectivement une âme 131,141 et deux ailes 132,142 parallèles entre elles et issues perpendiculairement des bords longitudinaux de ladite âme 131,141.

Pour pourvoir permettre le coulissement du deuxième profilé 14 à l'intérieur dudit premier profilé 13, le deuxième profilé 14 est tel que sa largeur hors-tout est strictement inférieure à la distance entre les faces internes des ailes 132 du premier profilé 13.

On désigne ici par "face interne" la face d'une aile 132 ou 142 qui se situe du côté de l'âme 131,141 respective et par "face externe" la face qui se situe du côté opposé.

Le premier profilé 13 comprend sur chacune de ses ailes 132 :
- une première lumière 133 traversant l'aile 132 associée de part en part et s'étendant parallèlement à ladite âme 131 depuis l'arrière du premier profilé 13 jusqu'au voisinage du milieu de ce dernier,
- une deuxième lumière 134 traversant l'aile 132 associée de part en part et comportant une première partie 134A s'étendant de façon inclinée, en s'écartant de ladite âme 131, depuis le voisinage du milieu du premier profilé 13 jusqu'à l'avant de ce dernier et une deuxième partie 134B issue de l'extrémité de ladite première partie 134A située du côté avant du premier profilé 13 et s'étendant en direction et perpendiculairement à l'âme 131.

Les côtés des premier et deuxième profilés 13,14 nommés "avant" et "arrière" sont ici définis par rapport au sens de déplacement du deuxième profilé 14 lorsqu'il passe de sa position "repos" à sa position "travail".

Lesdites deux premières lumières 133 sont disposées symétriquement par rapport à l'axe longitudinal du premier profilé 13. De même, lesdites deux deuxièmes lumières 134 sont également disposées symétriquement par rapport à l'axe longitudinal du premier profilé 13.

Le deuxième profilé 14 comporte une paroi interne 143 reliant les deux ailes 132 au voisinage de leur milieu et étant munie d'une poignée 144 sur sa face arrière et de deux pions de centrage 145 sur sa face avant, ladite paroi interne 143 déterminant avec les parties avant de l'âme 141 et des ailes 142 un logement 146.

On comprend bien qu'on désigne ici par face "avant" d'un équipement la face qui fait face à un utilisateur dans les conditions normales d'utilisation dudit équipement et, par conséquent, par face "arrière" dudit équipement la face opposée à cette face avant.

De plus, le deuxième profilé 14 comporte une découpe 147 réalisée sur l'avant de chacune de ses ailes 142. Chaque découpe 147 a une forme de L et comporte une première partie 147A issue perpendiculairement du bord avant de l'aile 142 associée et une deuxième partie 147B issue de l'extrémité de ladite première partie 147A et s'étendant en direction et perpendiculairement à l'âme 141.

Le deuxième profilé 14 comporte également des moyens de guidage aptes à coopérer avec les premières et deuxièmes lumières 133,134 du premier profilé 13 pour le guider lorsqu'il passe de sa position "repos" à sa position "travail". Ainsi, lesdits moyens de guidage comportent un axe 148 traversant l'arrière du deuxième profilé 14 perpendiculairement aux ailes 142 et débouchant à l'extérieur de chacune de ces dernières, chaque extrémité libre dudit axe 148 étant apte à coopérer avec l'une des premières lumières 133 du premier profilé 13. Lesdits moyens de guidage comprennent en outre deux organes de serrage 149 (Cf. figures 8 et 9). Chaque organe de serrage 149 comprend de préférence une poignée munie d'une tige filetée, cette dernière étant apte à coopérer avec la deuxième lumière 134 du premier profilé 13 et un taraudage, non représenté, réalisé dans l'aile 142 associée dudit deuxième profilé 14. Lesdits organes de serrage 149 permettent non seulement le guidage du deuxième profilé 14 mais également son blocage à l'intérieur du premier profilé 13.

L'équilibreuse 12 comporte au moins un carter 121 de forme globalement parallélépipédique contenant un moteur, non représenté, entraînant en rotation un arbre 122 s'étendant de la face avant 123 dudit carter 121 et apte à recevoir la roue, non représentée, à équilibrer.

Le carter 121 comporte sur sa face arrière 124 des logements, non représentés, aptes à coopérer avec les pions de centrage 145, lorsque l'équilibreuse 12 est insérée dans le logement 146 du deuxième profilé 14 entre les ailes 142 en appui sur l'âme 141 et sur la face avant de la paroi interne 143.

Le carter 121 comporte également un pion de guidage 125 issu perpendiculairement de chacune de ses faces longitudinales 126 et apte à coopérer avec la découpe 147 de l'aile 142 associée du deuxième profilé 14.

Avec cette configuration, pour mettre en oeuvre les moyens d'équilibrage 10, on procède de la manière décrite ci-après.

Tout d'abord, on fixe, par tout moyen approprié tel que par exemple le vissage, le premier profilé 13 de la glissière 11 sur l'extrémité libre du bras 3 du dispositif 1 de montage/démontage de pneumatique.

Ensuite, on met en place le deuxième profilé 14 à l'intérieur du premier profilé 13 en prenant soin de faire coopérer ses moyens de guidage avec les premières et deuxièmes lumières 133,134 du premier profilé 13, ledit deuxième profilé étant alors dans sa position "repos". Les extrémités libres de l'axe 148 sont alors insérées dans les premières lumières 133 et chaque organe de serrage 149 est alors inséré dans la deuxième lumière 134 associée du premier profilé 13 et vissé dans le taraudage réalisé dans l'aile 142 associée dudit deuxième profilé 14.

Avant de mettre en place l'équilibreuse 12 dans le deuxième profilé 14, on fait coulisser, à l'aide de la poignée 144, le deuxième profilé 14 à l'intérieur du premier profilé 13 jusqu'à ce que les organes de serrage 149 soient à l'extrémité de la deuxième partie 134B de la deuxième lumière 134 du premier profilé 13 située du côté de l'âme 131 (Cf. figure 8), cette position correspondant à la position de "travail" du deuxième profilé 14.

Ensuite, on bloque les organes de serrage 149 pour immobiliser le deuxième profilé 14 par rapport au premier profilé 13.

On comprend bien que le fait que la première partie 134A de la deuxième lumière 134 du premier profilé 13 soit inclinée permet de faciliter le coulissement du deuxième profilé 14 en "décollant" sa partie avant de l'âme 131 du premier profilé 13, évitant ainsi les problèmes d'adhérence entre les premier et deuxième profilés 13,14.

L'équilibreuse est ensuite mise en place dans le logement 146 du deuxième profilé 14 en prenant le soin d'engager les pions de centrage 145 dans ses logements et ses pions de guidage 125 dans la découpe 147 de l'aile 142 associée. Les pions de guidage 125 et le deuxième profilé 14 sont agencés pour que, lorsque le carter 121 de l'équilibreuse 12 est en appui sur la face avant de la paroi interne 143, les pions de guidage 125 viennent à l'extrémité de la deuxième partie 147B de la découpe 147 située du côté de l'âme 141 (Cf. figure 6). On comprend bien que cette configuration permet de bloquer l'équilibreuse 12 dans toutes les directions par rapport au deuxième profilé 14.

Cette situation pourra encore être renforcée par un organe de serrage, non représenté, du type vis, par exemple, vissé dans chaque pion de guidage 125 pour éviter tout soulèvement de l'équilibreuse par rapport à l'âme 141 du deuxième profilé 14.

Dans cette position dans laquelle le deuxième profilé 14 est en position "repos", l'équilibreuse 12 est suffisamment dégagée du bras 3 du dispositif 1 pour permettre la mise en place de la roue sur son arbre 122 et l'équilibrage de cette dernière.

Le dispositif 1 comporte en outre des moyens de freinage, non représentés sur les figures, pour arrêter la roue à la fin de l'équilibrage. Ces moyens de freinage comportent avantageusement une tige articulée aux moyens d'équilibrage 10, plus particulièrement au premier profilé 13 de la glissière 11, autour d'un axe sensiblement perpendiculaire à l'arbre 122 de l'équilibreuse 12. Ladite tige comporte à l'une de ses extrémités d'un patin apte à être appliqué, grâce à la rotation de la tige, sur le flan du pneumatique de la roue équilibrée pour ralentir puis arrêter ladite roue.

On comprend bien que le fait que la glissière 11 et l'arbre 122 s'étendent dans une direction sensiblement perpendiculaire au plan longitudinal du bras 3 du dispositif 1 et opposée au mandrin 4 et au moyeu 7, permet de démonter un pneumatique d'une roue d'un côté du bras 3 tout en équilibrant une autre roue de l'autre côté dudit bras 3. En outre, la mise en oeuvre de l'équilibrage est particulièrement simple et rapide sans avoir à démonter d'éléments du dispositif 1.

Enfin, le fait d'avoir des moyens d'équilibrage 10 comportant une équilibreuse 12 montée sur une glissière 11 permet d'avoir un dispositif 1 particulièrement compact lorsque l'équilibrage est terminé et que le deuxième profilé 14 est revenu dans sa positon "repos".

### Possibilité d'application industrielle

Le dispositif 1 selon l'invention s'applique plus particulièrement au montage/démontage de pneumatiques de véhicules du type poids lourds, mais il peut également être utilisé pour monter/démonter des pneumatiques d'un tout autre type de véhicules tel que les voitures ou les motos.

De même, si le dispositif 1 est principalement destiné à être embarqué dans un véhicule utilitaire léger, il va de soi qu'il peut également être disposé dans un tout autre type de véhicule ou dans un local du type garage ou magasin spécialisé dans l'entretien des véhicules.

Enfin, il va de soi que les exemples de dispositifs 1 de montage/démontage de pneumatique et d'équilibrage de roue conformes à l'invention qui viennent d'être décrits ne sont que des illustrations particulières, en aucun cas limitatives de l'invention.

## Revendications

1. - Dispositif (1) de montage/démontage de pneumatique et d'équilibrage de roue de véhicule, notamment du type poids lourds, embarqué dans un véhicule utilitaire léger, ledit dispositif (1) comportant au moins un premier châssis (2), un bras (3) articulé à l'une de ses extrémités audit châssis (2) et apte se replier en deux sur lui-même, un mandrin (4) solidaire de l'extrémité libre dudit bras (3) et agencé pour solidariser et faire tourner une jante autour d'un axe de rotation sensiblement perpendiculaire au plan longitudinal dudit bras (3), un porte-outil (5) muni d'au moins un outil de montage/démontage de pneumatique, et des moyens d'équilibrage (10) solidaires de l'extrémité libre du bras (3) et comportant au moins une équilibreuse (12) munie d'au moins un carter (121) contenant un moteur entrainant en rotation un arbre (122) apte à recevoir une roue à équilibrer, ledit arbre (122) s'étendant de la face avant (123) du carter (121) suivant une direction sensiblement perpendiculaire au plan longitudinal dudit bras (3) et opposée au mandrin (4), ledit dispositif (1) étant **caractérisé en ce que** les moyens d'équilibrage (10) comportent une glissière (11) fixée à l'une de ses extrémités sur l'extrémité libre du bras (3) et apte à recevoir ladite équilibreuse (12) de manière à pouvoir déplacer cette dernière par rapport au bras (3) selon une direction perpendiculaire au plan longitudinal dudit bras (3) et opposée au mandrin (4).

2. - Dispositif (1) selon la revendication 1 **caractérisé en ce que** la glissière (11) comporte un premier profilé (13) fixé à l'une de ses extrémités sur l'extrémité libre du bras (3) et un deuxième profilé (14) apte à recevoir l'équilibreuse (12) et à coulisser à l'intérieur dudit premier profilé (13) entre une position "repos" et une position "travail".

3. - Dispositif (1) selon la revendication 2 **caractérisé en ce que** lesdits premier et deuxième profilés (13,14) ont une section transversale en forme générale de U et comportent chacun respectivement une âme (131,141) et deux ailes (132,142) parallèles entre elles et issues perpendiculairement des bords longitudinaux de ladite âme (131,141), le deuxième profilé (14) étant tel que sa largeur hors-tout est strictement inférieure à la distance entre les faces internes des ailes (132) du premier profilé (13).

4. - Dispositif (1) selon la revendication 3 **caractérisé en ce que** le premier profilé (13) comprend sur chacune de ses ailes (132) :
- une première lumière (133) traversant l'aile (132) associée de part en part et s'étendant parallèlement à ladite âme (131) depuis l'arrière du premier profilé (13) jusqu'au voisinage du milieu de ce dernier,
- une deuxième lumière (134) traversant l'aile (132) associée de part en part et comportant une première partie (134A) s'étendant de façon inclinée, en s'écartant de ladite âme (131), depuis le voisinage du milieu du premier profilé (13) jusqu'à l'avant de ce dernier et une deuxième partie (134B) issue de l'extrémité de ladite première partie (134A) située du côté avant du premier profilé (13) et s'étendant en direction et perpendiculairement à l'âme (131),
lesdites premières et deuxièmes lumières (133,134) sont respectivement disposées symétriquement par rapport à l'axe longitudinal du premier profilé (13).

5. - Dispositif (1) selon l'une quelconque des revendications 3 ou 4 **caractérisé en ce que** le deuxième profilé (14) comporte, d'une part, une paroi interne (143) reliant les deux ailes (132) au voisinage de leur milieu et étant munie d'une poignée (144) sur sa face arrière et de deux pions de centrage (145) sur sa face avant, ladite paroi interne (143) déterminant avec les parties avant de l'âme (141) et des ailes (142) un logement (146) et, d'autre part, une découpe (147) réalisée sur l'avant de chacune de ses ailes (142).

6. - Dispositif (1) selon la revendication 5 **caractérisé en ce que** la découpe (147) a une forme de L et comporte une première partie (147A) issue perpendiculairement du bord avant de l'aile (142) associée et une deuxième partie (147B) issue de l'extrémité de ladite première partie (147A) et s'étendant en direction et perpendiculairement à l'âme (141).

7. - Dispositif (1) selon l'une quelconque des revendications 4 à 6 **caractérisé en ce que** le deuxième profilé (14) comporte également des moyens de guidage aptes à coopérer avec les premières et deuxièmes lumières (133,134) du premier profilé (13) pour le guider lorsqu'il passe de sa position "repos" à sa position "travail".

8. - Dispositif (1) selon la revendication 7 **caractérisé en ce que** lesdits moyens de guidage comportent, d'une part, un axe (148) traversant l'arrière du deuxième profilé (14) perpendiculairement aux ailes (142) et débouchant à l'extérieur de chacune de ces dernières, chaque extrémité libre dudit axe (148) étant apte à coopérer avec l'une des premières lumières (133) du premier profilé (13) et, d'autre part, deux organes de serrage (149) comprenant une poignée munie d'une tige filetée, cette dernière étant apte à coopérer avec la deuxième lumière (134) du premier profilé (13) et un taraudage réalisé dans l'aile (142) associée du deuxième profilé (14) de sorte à permettre non seulement le guidage de ce dernier mais également son blocage à l'intérieur du premier profilé (13).

9. - Dispositif (1) selon l'une quelconque des revendications 5 à 8 **caractérisé en ce que** le carter (121) comporte des logements sur sa face arrière (124) et un pion de guidage (125) issu perpendiculairement de chacune de ses faces longitudinales (126) lesdits logements et pions de guidage (125) étant aptes à coopérer respectivement avec les pions de centrage (145) et la découpe (147) de l'aile (142) associée du deuxième profilé (14), lorsque l'équilibreuse (12) est insérée dans le logement (146) du deuxième profilé (14) entre les ailes (142) et en appui sur l'âme (141) et sur la face avant de la paroi interne (143).

10. - Dispositif (1) selon l'une quelconque des revendications 1 à 9 **caractérisé en ce qu'**il comporte des moyens de freinage de la roue à équilibrer.

11. - Dispositif (1) selon la revendication 10 **caractérisé en ce que** lesdits moyens de freinage comportent une tige articulée aux moyens d'équilibrage (10) autour d'un axe sensiblement perpendiculaire à l'arbre (122) de l'équilibreuse (12), ladite tige comportant à l'une de ses extrémités d'un patin apte à être appliqué, grâce à la rotation de la tige, sur le flan du pneumatique de la roue à équilibrer pour ralentir puis arrêter ladite roue.
